# EUROPÄISCHE PATENTSCHRIFT

(11) **EP 3 725 593 B1**
(45) Veröffentlichungstag und Bekanntmachung des Hinweises auf die Patenterteilung: **06.10.2021**
(21) Anmeldenummer: 19182113.1
(22) Anmeldetag: 24.06.2019
(51) Int. Cl.: B60R 9/06

(54) **TRÄGERVORRICHTUNG**
SUPPORT DEVICE
DISPOSITIF DE SUPPORT

(30) Priorität: 17.04.2019 EP 19169948
(43) Veröffentlichungstag der Anmeldung: 21.10.2020
(73) Patentinhaber: Melder, Dieter, 86842 Türkheim (DE)
(72) Erfinder: Melder, Dieter, 86842 Türkheim (DE)
(74) Vertreter: Patentanwälte Olbricht, Buchold, Keulertz Partnerschaft mbB

(56) Entgegenhaltungen:
- EP-A2- 1 211 134
- CA-A1- 2 505 237
- DE-A1- 10 342 177
- FR-A1- 2 731 395
- JP-A- H08 175 276

## Beschreibung

Die Erfindung betrifft eine Trägervorrichtung zum Befestigen einer Last an einem Fahrzeug, umfassend ein Führungsmittel, ein Schwenkmittel und eine Tragplattform, wobei das Schwenkmittel mit der Tragplattform verbunden ist, sodass die Tragplattform um eine vertikale Achse des Schwenkmittels schwenkbar ist. Ferner bezieht sich die Erfindung auf ein Fahrzeug mit einer Trägervorrichtung.

EP 1 211 134 A2 offenbart eine Trägervorrichtung nach dem Oberbegriff des Anspruchs 1.

Es sind Vorrichtungen bekannt, die zum Transport von Lasten, wie beispielsweise Zweirädern, an Fahrzeugen vorgesehen sind. Dabei wird die Vorrichtung an dem Fahrzeug befestigt. Üblicherweise wird solch eine Vorrichtung am Heck eines Pkws oder eines Buses angebracht, wobei an dem Heck solcher Fahrzeuge gewöhnlich eine Hecktür beispielsweise in Form einer Kofferraumklappe bereitgestellt ist. Die Hecktür wird durch eine Anordnung der Vorrichtung und/oder der Last am Heck versperrt. Damit die Hecktür zugänglich ist, muss die Tragvorrichtung/Last abgebaut werden, z.B. was die Bedienung unhantlich macht.

Daher ist es Aufgabe der vorliegenden Erfindung eine Trägervorrichtung für mindestens eine Last bereitzustellen, die die vorgeschilderten Nachteile des Standes der Technik vermeidet.

Zur Lösung dieser Aufgabe werden die in den unabhängigen Patentansprüchen angegebene Merkmalskombinationen vorgeschlagen. Vorteilhafte Ausgestaltungen und Weiterbildungen der Erfindung ergeben sich aus den abhängigen Patentansprüchen.

Erfindungsgemäß wird zur Erreichung der die Aufgabe lösenden Vorteile vorgeschlagen, dass die Tragplattform derart um das Schwenkmittel verschwenkbar ist, dass in einer ersten Schwenkstellung der Tragplattform die Tragplattform im Wesentlichen parallel zum Führungsmittel orientiert ist. Die Tragplattform ist in einer zweiten Schwenkstellung winklig, insbesondere rechtwinklig zum Führungsmittel orientiert, wobei ein erster Teil der Tragplattform bezüglich dem Führungsmittel auf der einen Seite und ein zweiter Teil der Tragplattform bezüglich dem Führungsmittel auf der zweiten Seite angeordnet ist. Dadurch wird eine Trägervorrichtung erreicht, deren Tragplattform im ausgeschwenkten Zustand als auch während des Ausschwenkens zur Erreichung dieses Zustands nur einen geringen Raum benötigt. Insbesondere das Positionieren der Tragplattenabschnitte auf einer ersten und zweiten Seite des Führungsmittels ermöglicht eine Ausrichtung der Tragplatte, die gegenüber den Trägervorrichtungen aus dem Stand der Technik weniger von dem Fahrzeug, an dem die Trägervorrichtung angebracht ist, absteht.

Die erfindungsgemäße Aufgabe wird des Weiteren dadurch gelöst, dass an der Tragplattform ein Führungselement vorgesehen ist, dass in einer ersten Schwenkstellung der Tragplattform an oder in dem Führungsmittel angeordnet ist, und in einer zweiten Schwenkstellung aus dem Führungsmittel austritt. Dadurch wird eine Positionierung der Tragplatte vorgeschlagen, die wenig Raum einnimmt. Der Pfiff der Erfindung liegt darin, dass durch die Erfindung weder die Last von der Trägervorrichtung, noch die Tagvorrichtung vom Fahrzeug (zum Beispiel der Anhängerkupplung) abgebaut werden muss, um die Hecktüre oder Heckklappe des Fahrzeuges zu öffnen. Dadurch wird der Komfort und die Bedienbarkeit erheblich erhöht.

Gleichzeitig sinkt das Risiko die Last (zum Beispiel ein Fahrrad oder ein Motorrad) zu beschädigen, da diese mit der gesamten Trägervorrichtung bewegt wird, also nicht einzeln bewegt wird, was unter Umständen zu Beschädigungen führen kann.

Im Ergebnis wird die Last von der Trägervorrichtung kontrolliert zur Seite geschwenkt und stört somit nicht bei einem Hantieren an der Rückseite des Fahrzeuges. Dadurch ist der Heckbereich des Fahrzeuges, zum Beispiel der Kofferraum, schnell zugänglich, gleichzeitig befindet sich die Last in einem gesicherten Zustand auf der Trägervorrichtung und stört nicht die Be- und Entladetätigkeiten auf der Rückseite des Fahrzeuges.

Die Erfindung kombiniert eine hohe Komfortabilität mit einer einfachen Konstruktion, die betriebssicher und kostengünstig ist.

In einer weiteren Ausführungsform ist vorgesehen, dass das vorstehende Merkmal ("An der Tragplattform ist ein Führungselement vorgesehen, dass in einer ersten Schwenkstellung der Tragplattform an oder in dem Führungsmittel angeordnet ist, und in einer zweiten Schwenkstellung aus dem Führungsmittel austritt") mit dem Merkmal "Die Tragplattform ist derart um das Schwenkmittel verschwenkbar, dass in einer ersten Schwenkstellung der Tragplattform die Tragplattform im Wesentlichen parallel zum Führungsmittel orientiert ist und die Tragplattform in einer zweiten Schwenkstellung winklig, insbesondere rechtwinklig zum Führungsmittel orientiert ist, wobei ein erster Teil der Tragplattform bezüglich dem Führungsmittel auf der einen Seite und ein zweiter Teil der Tragplattform bezüglich dem Führungsmittel auf der zweiten Seite orientiert ist", kombiniert wird.

Bei einer bevorzugten Ausgestaltung des Vorschlags ist vorgesehen, dass das Führungselement an oder in dem Führungsmittel festlegbar ist, um ein Schwenken zu vermeiden. Das Festlegen ermöglicht ein Sichern der Tragplattform in einer vom Nutzer gewünschten Position.

Träger nicht festgelegt ist, sondern relativ zu diesem verschieblich ist, gegebenenfalls auch mit einer separaten Führung ausgestattet ist.

Vorteilhafterweise können die wenigstens zwei Schwenkmittel auf einer Seite der Tragplattform vorgesehen sein, wobei die wenigstens zwei Schwenkmittel an dem Führungsmittel angeordnet sind. Zwei Schwenkmittel gewährleisten eine stabile Schwenkbewegung, bei einem gleichzeitig auf die Tragplattform wirkenden hohem Gewicht.

Insbesondere ist vorgesehen, dass das Führungsmittel wenigstens eine Entnahmeöffnung aufweist, sodass das Führungselement durch die Entnahmeöffnung aus dem Führungsmittel entnehmbar ist. Die Lage der Entnahmeöffnung auf dem Führungsmittel legt den Ort der Schwenkachse fest, weil das Herausgleiten des Führungselementes durch die Entnahmeöffnung aus dem Führungsmittel durch das Verschenken der Tagplattform um diese Schwenkachse erfolgt. Durch die Wahl des Ortes der Entnahmeöffnung wird damit die Position des Schwenkbereiches, gegebenenfalls auch des Schwenkradiuses (zum Beispiel eine Teleskopstellung aufgrund entsprechender Zwangsführungen) definiert. Gegebenenfalls sind auch mehrere Öffnungen denkbar, um unterschiedliche Schwenkstellungen zu erreichen. So ist zum Beispiel der Ort der Entnahmeöffnung auch eine Einstellmöglichkeit für den Abstand der Tragplattform von der Fahrzeugseite, wenn die Tragplattform zur Seite geschwenkt ist.

Bei einer besonderen Weiterbildung ist vorgesehen, dass die Tragplattform um die vertikale Achse des Schwenkmittels an einem längsseitigen Ende des Führungsmittels von dem Führungsmittel wegschwenkbar ist, während das der Tragplattform zugeordnete Führungselement bei der Entnahmeöffnung durch das Wegschwenken von dem Führungsmittel entfernt wird. Bei dem Wegschwenken taucht das Führungselement bei der Entnahmeöffnung aus dem Führungsmittel aus. In diesem Fall ist das Schwenkmittel feststehend und die Verschiebbarkeit erfolgt an der Gegenführung gegenüber der die Tragplattform beweglich ist. Dabei ist vorgesehen, dass das Führungselement an der gleichen Stelle aus der Entnahmeöffnung heraustritt und innerhalb des Führungsmittels nicht bewegt und verschoben wird.

Ein vorteilhaft einfaches Gleiten in dem Führungsmittel kann erreicht werden, wenn das Führungsmittel einen C- oder U-förmigen Querschnitt aufweist, um das Führungselement zu umgreifen. Entsprechende C- oder U- förmige Profile sind in der Technik in großer Variabilität verfügbar und bilden eine günstige aber gleichwohl stabile Grundlage für die Realisierung des Führungselementes, um somit das Führungsmittel zuverlässig zu führen.

Eine zweckmäßige Weiterbildung beinhaltet, dass sich wenigstens eine Strebe quer von dem Führungsmittel in entgegengesetzter Richtung der Tragplattform erstreckt, wobei die Strebe ein freies Ende aufweist, das mit einem Teil eines Fahrzeuges verbindbar ist, sodass eine einfache und dennoch stabile Verbindung mit dem Fahrzeug hergestellt werden kann.

Ferner ist es vorteilhaft, dass an der Trägervorrichtung eine Aufnahme für eine Anhängerkupplung des Fahrzeugs angeordnet ist. Durch die Aufnahme für die Anhängerkupplung kann eine optimale Verbindung mit dem Fahrzeug hergestellt werden.

Die erfindungsgemäße Aufgabe wird auch durch ein Fahrzeug gelöst, das mit einer Trägervorrichtung ausgestattet ist, die ein Führungsmittel in horizontaler Richtung entlang eines Hecks mit einer Hecktür, vorzugsweise entlang einer Stoßstange, des Fahrzeugs angebracht ist, wobei eine Tragplattform mittels mindestens eines Schwenkmittels, zumindest teilweise neben das Fahrzeug schwenkbar ist. Durch die Trägervorrichtung kann eine Last leicht außen an das Fahrzeug angebracht und transportiert werden. Insbesondere ist vorgesehen, dass durch den Einsatz der Trägervorrichtung das erfindungsgemäße Fahrzeug am Heck sehr viel leichter und komfortabler zu bedienen ist und insbesondere auch schwächere Personen, wie zum Beispiel Frauen, problemlos den Kofferraum be- und entladen können, wenn eine entsprechende Last transportiert wird.

Eine weitere Ausführungsform sieht bei dem Fahrzeug nach der Erfindung vor, dass das Fahrzeug eine anhängige Anhängerkupplung aufweist, die zur Verbindung der Trägervorrichtung mit dem Fahrzeug dient. Auf die Anhängerkupplung kann die Trägervorrichtung angeordnet werden, sodass hohe Lasten auf der Tragplattform der Trägervorrichtung positioniert werden können.

Besonders geschickt ist eine Ausführungsform, bei der das Fahrzeug mindestens einen Tragholm aufweist, der mit der Strebe der Trägervorrichtung zusammenwirkt, zum Beispiel in diesen einschieb- und befestigbar ist, wodurch eine besonders stabile Verbindung mit dem Fahrzeug erzeugt werden kann.

In den Figuren ist die Erfindung insbesondere in verschiedenen Ausführungsbeispielen schematisch dargestellt. Es zeigen:
- Fig. 1a,1b,1c: je in einer dreidimensionalen, eine nicht erfin dungsgemäße Trägervorrichtung nach einem ersten Ausführungsbeispiel mit einem Schlitten, der teleskopartig aus einem Führungsmittel ausgefahren werden kann,
- Fig. 2a,2b,2c,2d: eine nicht erfindungsgemäße Trägervorrichtung nach einem weiteren Ausführungsbeispiel, bei der ein Ausschwenken einer Tragplattform möglich ist, die mittels Rahmenfortsätzen an einem Führungsmittel angebracht ist,
- Fig. 3a,3b,3c,3d,3e: eine erfindungsgemäße Trägervorrichtung, die einen Gelenkträger für eine Schwenkbewegung vorsieht,
- Fig. 4a,4b: eine Verbindung aus einem Tragholm an einer Stoßstange und einer dazu komplementären Strebe an der Trägervorrichtung nach der Erfindung,
- Fig. 5a,5b: eine, ein weiteres Beispiel der Verbindung aus Tragholm und Strebe in doppelter Ausführung an einer Trägervorrichtung nach der Erfindung,
- Fig. 6: eine alternative Verbindung der Trägervorrichtung mit Befestigungslaschen an den Tragholmen nach der Erfindung, und
- Fig. 7a,7b: eine weitere alternative Verbindung der Tragvorrichtung mit dem Fahrzeug, wobei die Trägervorrichtung mit einer Aufnahme auf einer Anhängerkupplung anordenbar ist, nach der Erfindung

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

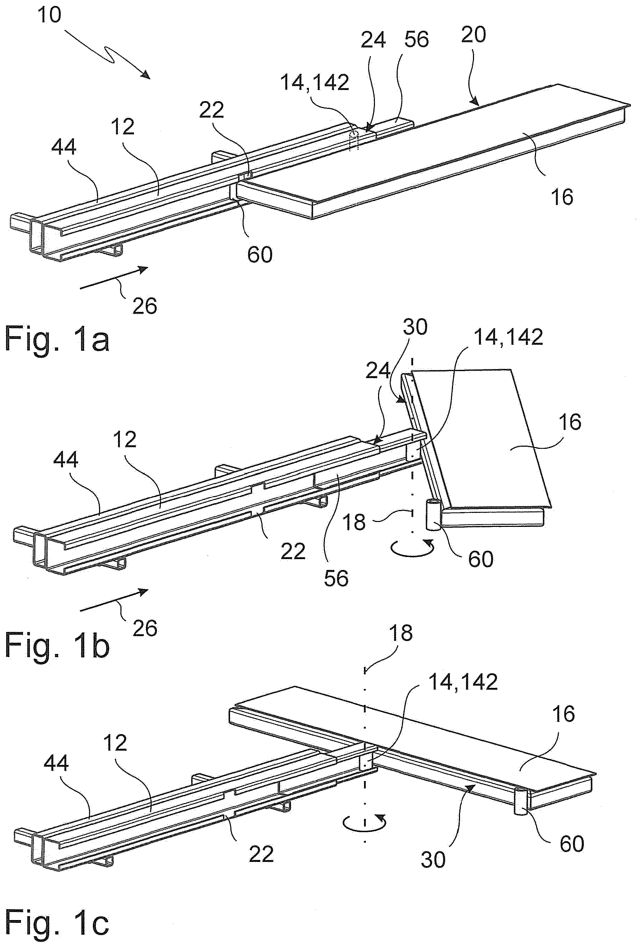

**Figur 1a** offenbart eine Trägervorrichtung 10 zum Befestigen einer Last an einem Fahrzeug. Dabei umfasst die Trägervorrichtung 10 ein Führungsmittel 12, ein Schwenkmittel 14 und eine Tragplattform 16, wobei das Schwenkmittel 14 mit der Tragplattform 16 verbunden ist. Das Schwenkmittel 14, welches einem axialen Ende 24 des Führungsmittels 12 zugewandt ist, um welches die Tragplattform geschwenkt wird, ist im nachfolgenden auch als zweites Schenkmittel 142 bezeichnet.

Vorzugsweise ist die Tragplattform 16 rechteckig und umfasst eine Platte 32, die auf einer rahmenartigen Struktur angeordnet ist. Das Führungsmittel 12 ist länglich ausgeformt und mit einer der Tragplattform 16 abgewandten Seite an einer Stoßstange 44 eines Fahrzeugs angebracht. Das Fahrzeug ist in den Figuren nicht abgebildet. Die Tragplattform 16 wird entlang der Längsrichtung des Führungsmittels 12 verschoben.

Die Tragplattform 16 ist um eine vertikale Achse 18 des Schwenkmittels 14 schwenkbar, sodass die Tragplattform vorzugsweise senkrecht zur Achse 18 ausgerichtet ist. Ferner erstreckt sich die Tragplattform 16 in einer Ebene, die senkrecht zur Achse 18 ausgerichtet ist. Die Tragplattform 16 ist entlang der zur Achse 18 senkrechten Ebene schwenkbar. Die Verbindung zwischen Tragplattform 16 und Schwenkmittel 14 ist starr, sodass eine Schwenkachse 18 des Schwenkmittels 14 gegenüber der Fläche der Tragplattform 16 nicht verkippbar ist.

Ferner wird die Tragplattform 16 entlang des Führungsmittels in horizontaler Richtung 26 verschoben und in einer Position gebracht, in der die Tragplattform verschwenkt werden kann.

An der Tragplattform 16 ist ein Führungselement 60 insbesondere starr angebracht, dass in einer ersten Schwenkstellung der Tragplattform 16 an oder in dem Führungsmittel 12 angeordnet ist. Insbesondere ist das Führungselement 60 an einer Längsseite 30 der rahmenartigen Struktur angebracht. Vorzugsweise ist das Führungselement 60 unmittelbar an der Tragplattform 16 und/oder an der Längsseite 30 der rahmenartigen Struktur angeordnet.

Während der Bewegung der Tragplattform 16 entlang des Führungsmittels 12 gleitet das Führungselement 60 in oder an dem Führungsmittel 12 entlang und sorgt für eine parallele Ausrichtung der Tragplattform 16 bezüglich dem Führungsmittel 12. Hierbei wird die Längsseite 30 der rahmenförmigen Struktur der Tragplattform 16 parallel zum Führungsmittel 12 ausgerichtet.

Vorzugsweise wird das Führungselement 60 zum Erreichen der ersten Schwenkstellung der Tragplattform 16 in dem Führungsmittel 12 geführt, wobei es von dem Führungsmittel umgriffen wird und gleichzeitig entlang dem Führungsmittel 12 in horizontaler Richtung 26 längsverschiebbar ist. Die horizontale Richtung 26 ist senkrecht zur Erdanziehungsrichtung.

Im Bereich des axialen Endes 24 des Führungsmittels 12 ist in oder an dem Führungsmittel 12 ein Schlitten 56 angeordnet. Der Schlitten 56 ist in dem Führungsmittel 12 beweglich geführt, wobei der Schlitten 56 derart aus dem Führungsmittel 12 wenigstens bezüglich seiner Längsrichtung teilweise herausschiebbar ist. Der Schlitten 56 kann am axialen Ende 24 des Führungsmittels 12 nach dem Herausschieben, herausragen. Dabei kann das Schwenkmittel 14 mit dem Schlitten 56 aus dem Führungsmittel 12 herausbefördert werden, sodass das Schwenkmittel 14 nicht mehr von dem Führungsmittel 12 umgeben ist oder an dem Führungsmittel 12 angebracht ist. Das Schwenkmittel 14 befindet sich in der abschließenden ersten Schwenkstellung im zum Führungsmittel 12 distalen axialen Ende 24 des Schlittens 56.

Für das Schwenken der Tragplattform 16 um das Schwenkmittel 14 wird die Tragplattform 16 in eine erste Schwenkstellung gebracht, die im Wesentlichen parallel zum Führungsmittel 12 orientiert ist. Dazu wird die Tragplattform 16 in den Bereich eines axialen Endes 24 des Führungsmittels 12 befördert. Hierbei wird insbesondere das Schwenkmittel 14 im Bereich des axialen Endes 24 positioniert.

Während der Schwenkbewegung, wie in **Figur 1b** gezeigt ist, tritt das Führungselement 60 aus dem Führungsmittel 12 aus. Somit entfernt sich das Führungselement 60 durch das Schwenken von dem Führungsmittel 12. Im Falle eines das Führungselement 60 umgreifenden Führungsmittels 12 ist eine Entnahmeöffnung 22 in dem Führungsmittel 12 vorgesehen, durch das das Führungselement 60 austreten kann. Die Entnahmeöffnung 22 ist an der Längsseite des Führungsmittels 12 ausgeformt und der Tragplattform zugewandt.

Das Führungselement 60 tritt beim Ausschwenken der Tragplattform 16 zuerst an der Entnahmeöffnung 22 des Führungsmittels 12 aus, wenn der Schlitten 56 aus dem Führungsmittel 12 zumindest teilweise herausgeschoben ist. Vorzugsweise ist während des Ausschwenkens das zweite Schwenkmittel 142 in dem Schlitten 56 positioniert.

Bei einer besonders bevorzugten Alternative weist das Führungsmittel 12 einen Querschnitt auf, der das Führungselement 60 umgreift. Das Führungsmittel 12 umgibt das Führungselement 60 derartig, dass eine Gewichtskraft einer Last auf der Tragplattform von dem Führungsmittel 12 abgestützt wird. Ferner ist das Führungselement 60 in dem Führungsmittel 12 geführt. Das Führungselement 60 gleitet in dem Führungsmittel 12. Ebenso kann der Schlitten 56 von dem Führungsmittel 12 umgriffen werden. Alternativ kann der Schlitten 56 das Führungsmittel 12 umgreifen.

Damit eine möglichst spielarme und dennoch gut gleitende Führung des Führungselements 60 in dem Führungsmittel 12 erfolgen kann, ist das Führungselement 60 komplementär zu dem Führungsmittel 12 ausgebildet. Dazu weist das Führungselement 60 eine Kontur auf, die dem Querschnitt des Führungsmittels 12 angepasst ist, sodass das Führungselement 60 auf dem Führungsmittel 12 geführt ist.

Der Querschnitt des Führungsmittels 12 ist hierbei insbesondere C-oder U-förmig, wobei das Führungselement 60 von dem Führungsmittel 12 umgriffen ist. Das Führungsmittel 12 ist somit schienenförmig. Das Schwenkmittel 14 und das Führungselement 60 sind entlang des Führungsmittels 12 verschiebbar, um in die erste oder aus der ersten Schwenkposition befördert zu werden. Die längliche Öffnung des Profils des Führungsmittels 12 ist in Richtung Tragplattform 16 gerichtet.

Die Tragplattform 16 kann in eine zweite Schwenkstellung gemäß **Figur 1c** gebracht werden, die winklig, insbesondere rechtwinklig zum Führungsmittel 12 orientiert ist. Die zweite Schwenkstellung kann aus der ersten Schwenkstellung heraus erreicht werden, wobei ein Schwenken um die Achse 18 des Schwenkmittels 14 herum erfolgt. Ebenso kann durch ein Schwenken um die Achse 18 herum die Tragplattform 16 von der zweiten in die erste Schenkstellung erreicht werden. Ein erster Teil der Tragplattform 16 ist bezüglich dem Führungsmittel 12 auf der einen Seite und ein zweiter Teil der Tragplattform 16 ist bezüglich dem Führungsmittel 12 auf der zweiten insbesondere gegenüberliegenden Seite orientiert. Schließlich ist die Längsseite 30 des Rahmens quer zum Führungsmittel 12 ausgerichtet.

Die Tragplattform 16 wird für das Verschwenken von der ersten Schwenkposition (**Figur 1a**) in die zweite Schwenkposition (Figur 1c) zuerst entlang des Führungsmittels 12 in horizontaler Richtung 26 entlang geschoben, bis das zweite Schwenkmittel im Bereich des längsseitigen axialen Endes 24 des Führungsmittels 12 ankommt oder sofern ein Schlitten 56 an dem Führungsmittel 56 vorgesehen ist, an dessen distalen axialen Ende positioniert ist. Dabei wird das Führungselement 60 an der Entnahmeöffnung 22 positioniert. Während dem Wegschwenken (**Figur 1b**) der Tragplattform 16 um die vertikale Achse 18 des Schwenkmittels 14, 142 am längsseitigen axialen Ende 24 des Führungsmittels 12 wird das Führungselement 60 durch die Entnahmeöffnung 22 von dem Führungsmittel 12 entfernt. In der zweiten Schwenkstellung ist die Tragplattform 16 neben der Stoßstange 44 und somit auch neben dem Fahrzeug positioniert, sodass eine Heckklappe des Fahrzeugs zugänglich ist, sofern die Trägervorrichtung 10 an der hinteren Stoßstange 44 angebracht ist.

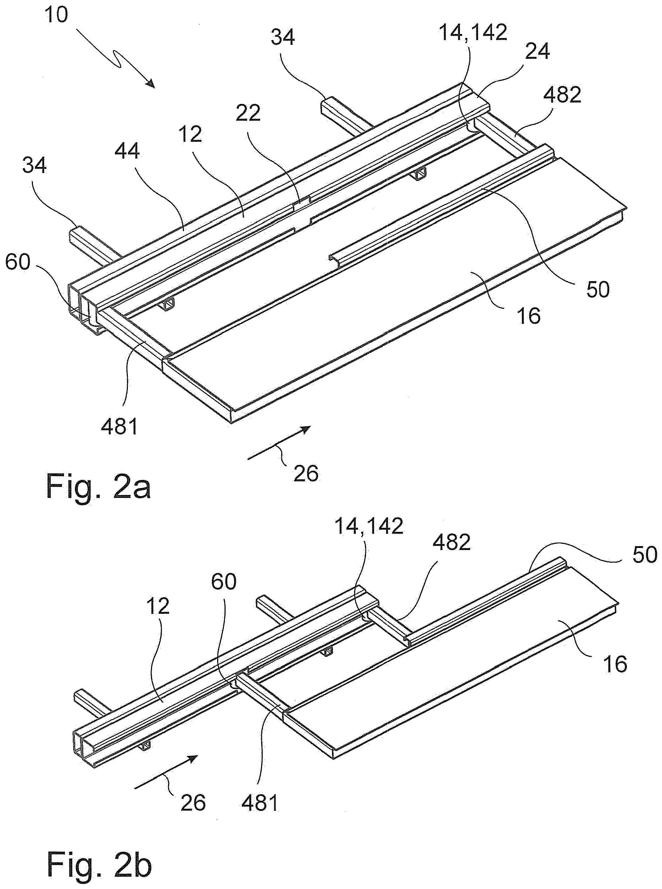

In **Figur 2a** ist eine weitere Ausführungsform gezeigt, die wie in **Figur 1a bis 1c** eine Führungsschiene 12 aufweist, die an einer Stoßstange 44 angebracht ist. Ferner ist das Führungsmittel 12 länglich ausgebildet und weist einen U- oder C-förmigen Querschnitt auf, in dem das Führungselement 60 gleitet.

An der Tragplattform 16 ist eine Gegenführung 50 angeordnet, die in sich entlang der Längsseite 30 der Tragplattform 16 erstreckt. Insbesondere erstreckt sich die Gegenführung ungefähr bis zur Hälfte der Tragplattform 16.

In der ersten Schwenkstellung und während der Schiebebewegung in die erste Schwenkstellung (**Figuren 2a und 2b**) ist die Gegenführung 50 dem Führungsmittel 12 zugewandt. Die Gegenführung ist dabei parallel zum Führungsmittel 12.

Zwischen dem Führungselement 60 und der Tragplattform 16 ist ein erster Rahmenfortsatz 481 vorgesehen ist. Der erste Rahmenfortsatz 481 ist starr an der Tragplattform 16 angebracht und erstreckt sich insbesondere senkrecht in Richtung des Führungsmittels 12.

Zusätzlich ist zwischen dem Schwenkmittel 14 und einem in der Gegenführung gleitenden Fußstück 61 ein zweiter Rahmenfortsatz 482 angeordnet. Durch die vorzugsweise gleichlangen Rahmenfortsätze 481, 482 wird die Tragplattform 16 parallel zur Führungsschiene 12 ausgerichtet. Ferner ist die Tragplattform 16 durch die Rahmenfortsätze 481, 482 beabstandet.

**Figur 2b** zeigt eine in die erste Schwenkstellung verschobene Tragplattform 16. Dabei ist die Tragplattform 16 soweit verschoben, dass die Gegenführung 50 neben dem Führungsmittel 12 angeordnet ist. Der starr an der Tragplattform 16 angebrachte Rahmenfortsatz 481 läuft mit der Schiebebewegung mit, wobei in der ersten Schwenkstellung das Führungselement 60 an der Entnahmeöffnung positioniert ist.

Der zweite Rahmenfortsatz 482 ist in der Gegenführung 50 in horizontaler Richtung 26 verschiebbar, wobei das Fußstück 61 in dem Führungsmittel 12 gleitet. Ferner ist das zweite Schwenkmittel 142 in dem Führungsmittel 12 nicht verschiebbar. Es ist lediglich um die vertikale Achse 18 rotierbar.

Somit wird bei einer Verschiebung aus der Ausgangsposition (**Figur 2a**) in die erste Schwenkstellung (**Figur 2b**) der starr an der Trägervorrichtung 16 angebrachte erste Rahmenfortsatz 481 in dem Führungsmittel 12 in horizontaler Richtung 26 verschoben, während das Schwenkmittel 142 fest positioniert ist und dafür gleichzeitig mit dem Führungselement 60 das Fußstück 61 des zweiten Rahmenfortsatzes 482 in der Gegenführung verschoben wird. Dabei wird der zweite Rahmenfortsatz 481 am mittleren Bereich der Tragplattform 16 an einem Ende der Gegenführung 50 positioniert. Die Rahmenfortsätze 481, 482 ragen durch die längliche Öffnung des Profils des Führungsmittels 12 hindurch.

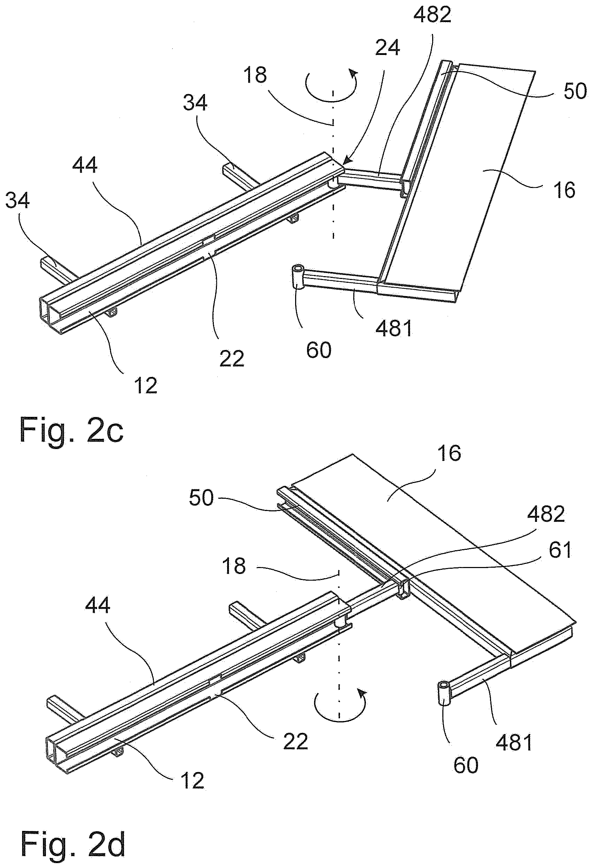

Während der Schwenkbewegung um die vertikale Achse 18 wird gemäß **Figur 2c** das Führungselement 60 durch die Entnahmeöffnung 22, insbesondere wie in **Figur 1b**, aus dem Führungsmittel 12 geschwenkt. Dabei ist der Schwenkradius der Tragplattform durch den zweiten Rahmenfortsatz vergrößert, sodass während der Schwenkbewegung die Tragplattform von dem Führungsmittel 12 beabstandet ist.

**Figur 2d** offenbart die Trägervorrichtung 10 in der zweiten Schwenkstellung, wobei die Tragplattform 16 von dem Führungsmittel 12 beabstandet ist. In der zweiten Schwenkstellung ist die Tragplattform 16 senkrecht zur Stoßstange 44 und zum Führungsmittel 12 .

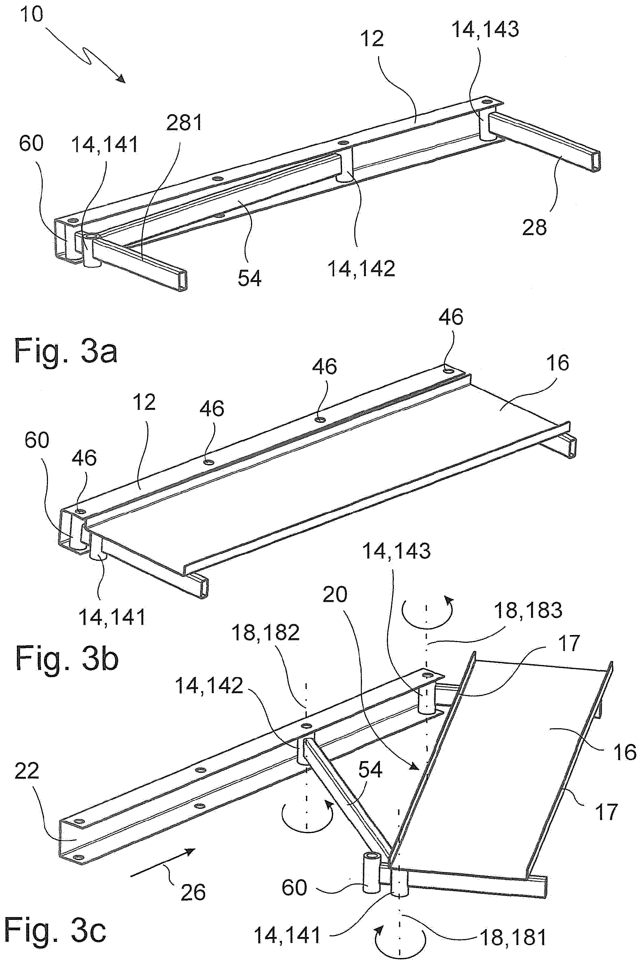

In **Figur 3a** ist eine erfindungsgemäße Ausführungsform der Trägervorrichtung 10 dargestellt, bei der an der Tragplattform 16 ein erstes Schwenkmittel 14,141 angeordnet ist, welches über einen Gelenkträger 54 mit einem am Führungselement 12 angeordneten zweiten Schwenkmittel 14,142 verbunden ist. Beide Schwenkmittel 141, 142 sind um jeweilige vertikale Achsen 18 rotierbar. Dabei ist das zweite Schwenkmittel 142 mit einem Befestigungsmittel durch ein Loch 46 in der Führungsschiene 12 drehbar befestigt. Dabei ist die Führungsschiene 12 insbesondere U-förmig ausgebildet.

Des Weiteren liegt die Platte 32 der Tragplattform 16 auf einem Träger 28 auf, wobei Sie relativ zu diesem, entsprechend der Schwenkstellung, verschieblich ist. Der Träger 28 ist über ein drittes Schwenkmittel 14,143 am Führungsmittel 12 um eine vertikale Achse 18 schwenkbar gelagert, sodass die Tragplattform 16 geschwenkt werden kann. Das dritte Schwenkmittel 143 ist durch ein Loch 46 im Führungsmittel 12 befestigt.

Das dritte Schwenkmittel 143 ist an dem axialen Ende 24 angeordnet, während das zweite Schwenkmittel 142 ungefähr mittig in dem Führungsmittel 12 positioniert ist. Das Führungselement 60 wird an einem dem dritten Schwenkmittel 143 gegenüberliegenden Ende des Führungsmittels 12 ein- und ausgeschwenkt, wobei das Führungselement 60 an dem Gelenkträger 54 angebracht ist. Dabei ist zwischen dem Führungselement 60 und dem Gelenkträger 54 das erste Schwenkmittel 14 positioniert. Es kann dort an oder in dem Führungsmittel 12 festgelegt werden, um ein Schwenken zu vermeiden. Zum Festlegen des Führungselements 60 ist ein Loch 46 im Führungsmittel 12 vorgesehen, durch das ein Befestigungsmittel in ein Loch im Führungselement 60 gesteckt werden kann.

Bei allen Ausführungsformen können die Schwenkmittel 141, 142, 143 Gelenke sein, die einen Freiheitsgrat in der Ebene der Schwenkbewegung aufweisen.

Es sind wenigstens zwei Schwenkmittel 14, 142, 143 auf einer Seite 20 der Tragplattform 16 vorgesehen sind, wobei die wenigstens zwei Schwenkmittel 14, 142, 143 an dem Führungsmittel 12 angeordnet sind. Insbesondere sind das erste und dritte Schwenkmittel 141, 143 an oder in dem Führungsmittel 12 unverschieblich angeordnet, jedoch rotierbar.

**Figur 3b** zeigt die Trägervorrichtung 10 in einer Ausgangsposition, wenn die Tragplattform 16 mit dem Führungselement 60 in dem Führungsmittel 12 festgelegt ist. Dabei ist der Gelenkträger 54 in dem Führungsmittel 12 versenkt. Ferner ist der Träger 28 ungefähr senkrecht zum Führungsmittel 12.

**Figur 3c** zeigt die Tragplattform 16 während der Schwenkbewegung, im in eine Position neben der Stoßstange 44 zu gelangen. Dabei werden die Schwenkmittel 141, 142, 143 um ihre jeweilige vertikale Achse 181, 182, 183 rotiert und somit ein Ausschwenken der Tragplattform 16 bewerkstelligt. Der Gelenkträger 54 und der Träger 28 verändern dabei ihre Winkel zum Führungsmittel 12 und zur Tragplattform 16. Längsverlaufende Hochkantungen 17 begrenzen die Tragplattform 16.

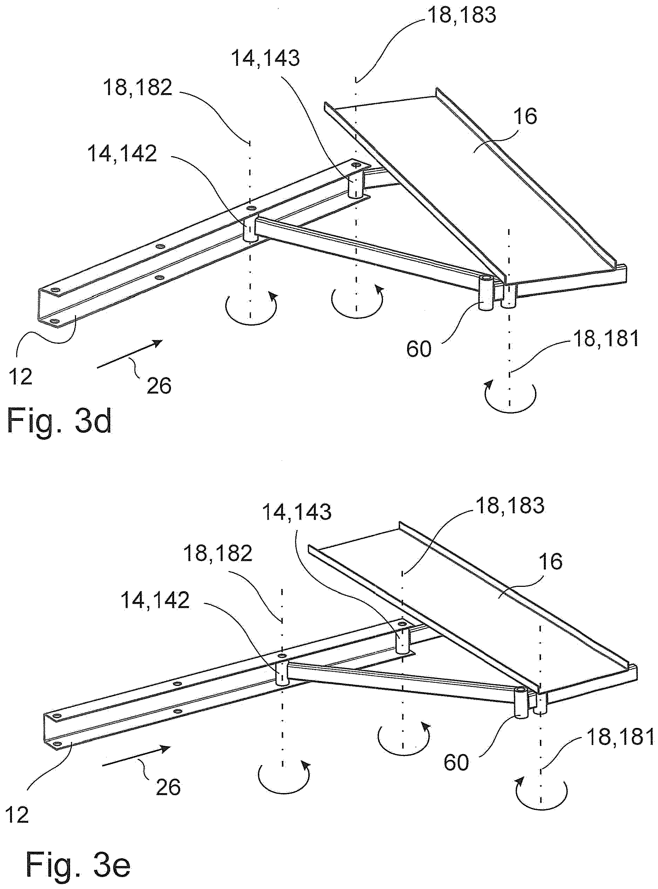

**Figur 3d** offenbart die Tragplattform 16 kurz bevor sie ihre zweite Schwenkstellung eingenommen hat. Dabei sind die Winkel, die durch den Träger 28 und den Gelenkträger 54 eingeschlossen werden, durch eine Rotation der Schwenkmittel 14 um die vertikalen Achsen 18 weiter verändert worden.

**Figur 3e** stellt die Trägervorrichtung 10 in der zweiten Schwenkposition dar, wobei die Tragplattform 16 ungefähr senkrecht zum Führungsmittel 12 positioniert ist. Außerdem fluchtet der Träger 28 mit dem Führungsmittel 12 und der Gelenkträger 54 schließt einen spitzen Winkel mit dem Führungsmittel 12 ein, der in Richtung Tragplattform 16 geöffnet ist.

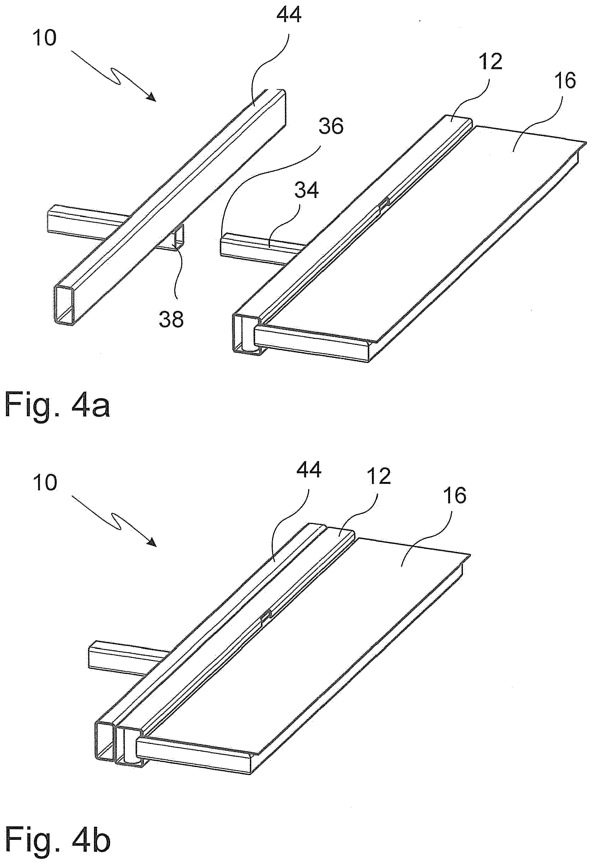

Zur Befestigung der Trägervorrichtung 10 ist gemäß **Figur 4a** an der Stoßstange des Fahrzeugs ein Tragholm 38 angeordnet, der im Wesentlichen senkrecht zur Stoßstange ausgerichtet ist. Der Tragholm 38 ist hohl und weist eine Öffnung auf, die in Richtung Tragplattform 16 weist. An der Rückseite des Führungsmittels 12 ist eine sich quer von dem Führungsmittel 12 in entgegengesetzter Richtung der Tragplattform 16 ersteckende Strebe 34 angeordnet. Die Strebe 34 weist ein freies Ende 36 auf, das in den Tragholm 38 durch dessen Öffnung eingesteckt wird.

Dadurch wird die Rückseite des Führungsmittels 12 entlang der horizontalen Richtung 26 an der Stoßstange 44 angeordnet, wie es in **Figur 4b** gezeigt ist. Die Verbindung zwischen Tragholm 38 und Sterbe 34 stellt eine Abstützung dar, die gegen die Gewichtskraft der Last auf der Tragplattform 16 und der Trägervorrichtung 10 wirkt.

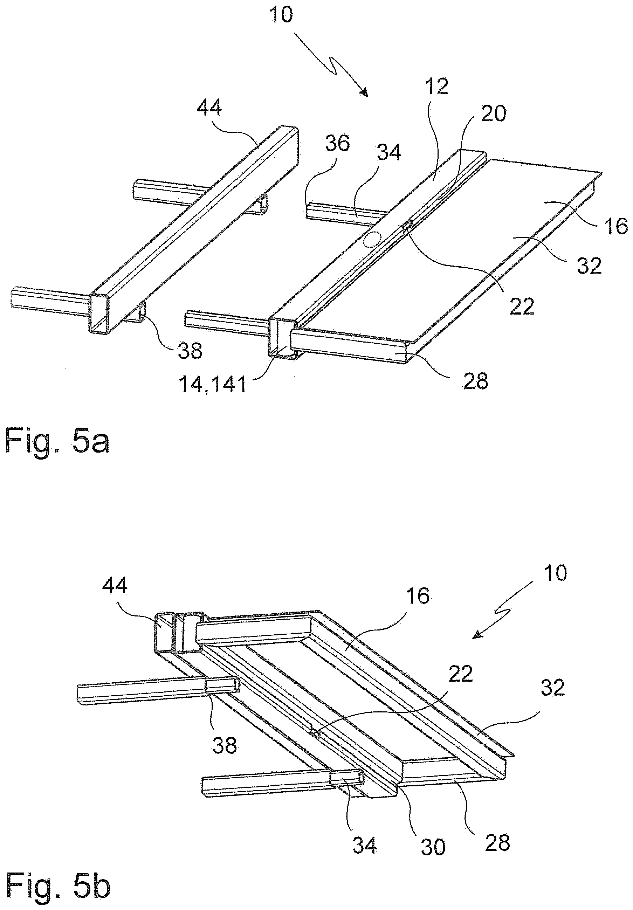

**Figur 5a** beinhaltet eine Ausführungsform mit zwei Streben 34 die in zwei Tragholme 38 eingeschoben werden. Dabei sind beide Sterben 34 und beide Tragholme 38 parallel zueinander.

In **Figur 5b** ist die Tragplattform von unten gezeigt, wobei der Rahmen mit am Rand der Platte 32 umläuft und die Platte 32 abstützt. Dabei ist das Führungsmittel 12 entlang der Stoßstange 44 angeordnet.

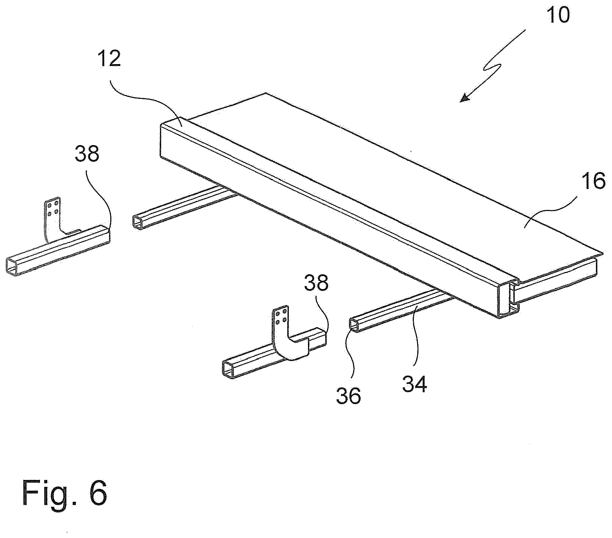

Eine alternative Befestigungsmöglichkeit ist in **Figur 6** gezeigt, wobei zwei Tragholme 38 links und rechts an dem Fahrzeug, vorzugsweise an dem Rahmen des Fahrzeugs, mittels sich vertikal nach oben ersteckender Laschen befestigt werden. Die Laschen weisen dabei vorzugsweise Löchere für die Befestigung mittels Befestigungsmitteln wie Schrauben auf. Die Laschen sind in etwa L-förmig ausgeführt.

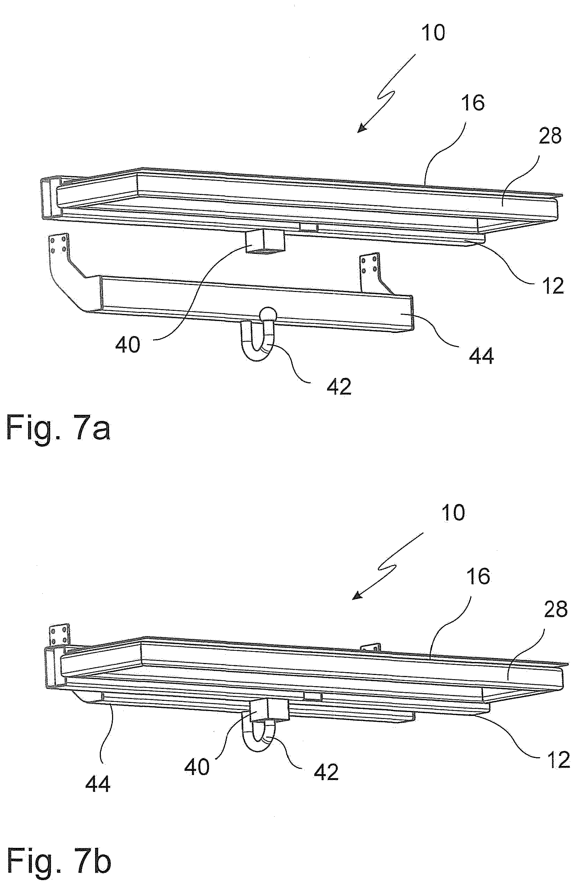

**Figur 7a** zeigt eine weitere Alternative zur Befestigung der Trägervorrichtung 10, wobei die Trägervorrichtung im Begriff ist auf eine Anhängerkupplung 42 gesetzt zu werden. Dazu ist an der Trägervorrichtung 10, bevorzugt an dem Führungsmittel 12, eine Aufnahme 40 für die Anhängerkupplung 42 des Fahrzeugs angeordnet. Die Aufnahme ist ungefähr mittig auf der Unterseite insbesondere des Führungsmittels angeordnet und die Anhängerkupplung kann in die Aufnahme 40 gesteckt werden. Dabei ist das Anhängerkupplung 42 an der Stoßstange 44 angebracht.

In **Figur 7b** ist die Trägervorrichtung 10 derartig aufgesetzt, dass das Führungsmittel 12 entlang der Stoßstange 44 positioniert ist.

## Patentansprüche

1. Trägervorrichtung zum Befestigen einer Last an einem Fahrzeug, umfassend ein Führungsmittel (12), ein Schwenkmittel (14) und eine Tragplattform (16), wobei das Schwenkmittel (14) mit der Tragplattform (16) verbunden ist, sodass die Tragplattform (16) um eine vertikale Achse (18) des Schwenkmittels (14) schwenkbar ist, wobei die Tragplattform (16) derart um das Schwenkmittel (14) verschwenkbar ist, dass in einer ersten Schwenkstellung der Tragplattform (16) die Tragplattform (16) im Wesentlichen parallel zum Führungsmittel (12) orientiert ist und in einer zweiten Schwenkstellung die Tragplattform (16) winklig zum Führungsmittel (12) orientiert ist, wobei ein erster Teil der Tragplattform (16) bezüglich dem Führungsmittel (12) auf der einen Seite und ein zweiter Teil der Tragplattform (16) bezüglich dem Führungsmittel (12) auf der zweiten Seite angeordnet ist, **dadurch gekennzeichnet, dass** an der Tragplattform (16) ein erstes Schwenkmittel (14,141) angeordnet ist, welches über einen Gelenkträger (54) mit einem am Führungsmittel (12) angeordneten zweiten Schwenkmittel (14, 142) verbunden ist und des Weiteren die Tragplattform (16) auf einem Träger (28) aufliegt und relativ zu diesem, entsprechend der Schwenkstellung verschieblich ist, und der Träger (28) über ein drittes Schwenkmittel (14,143) am Führungsmittel (12) schwenkbar gelagert ist.

2. Trägervorrichtung nach Anspruch 1, **dadurch gekennzeichnet, dass** an der Tragplattform (16) ein Führungselement (60) vorgesehen ist, dass in einer ersten Schwenkstellung der Tragplattform (16) an oder in dem Führungsmittel (12) angeordnet ist, und in einer zweiten Schwenkstellung aus dem Führungsmittel (12) austritt.

3. Trägervorrichtung nach Anspruch 2, **dadurch gekennzeichnet, dass** das Führungselement (60) an oder in dem Führungsmittel (12) festlegbar ist, um ein Schwenken zu vermeiden.

4. Trägervorrichtung nach einem der vorherigen Ansprüche, **dadurch gekennzeichnet, dass** die wenigstens zwei Schwenkmittel (14, 142, 143) auf einer Seite (20) der Tragplattform (16) vorgesehen sind, wobei die wenigstens zwei Schwenkmittel (14, 142, 143) an dem Führungsmittel (12) angeordnet sind.

5. Trägervorrichtung nach einem der Ansprüche 2 und 3, **dadurch gekennzeichnet, dass** das Führungsmittel (12) wenigstens eine Entnahmeöffnung (22) aufweist, sodass das Führungselement (60) durch die Entnahmeöffnung (22) aus dem Führungsmittel (12) entnehmbar ist.

6. Trägervorrichtung nach einem der Ansprüche 2, 3 und 5 **dadurch gekennzeichnet, dass** das Führungsmittel (12) einen C oder U-förmigen Querschnitt aufweist, um das Führungselement (60) zu umgreifen.

7. Trägervorrichtung nach einem der Ansprüche 5 und 6, **dadurch gekennzeichnet, dass** die Tragplattform (16) um die vertikale Achse (18) des Schwenkmittels (14, 142, 143) an einem längsseitigen Ende (24) des Führungsmittels (12) von dem Führungsmittel (12) wegschwenkbar ist, während das der Tragplattform (16) zugeordnete Führungselement (60) bei der Entnahmeöffnung (22) durch das Wegschwenken von dem Führungsmittel (12) entfernt wird.

8. Trägervorrichtung nach einem der vorherigen Ansprüche, **dadurch gekennzeichnet, dass** das zweite und dritte Schwenkmittel (142, 143) jeweils mit einem Befestigungsmittel durch ein Loch (46) in dem Führungsmittel (12) drehbar befestigt sind.

9. Trägervorrichtung nach einem der vorherigen Ansprüche, **dadurch gekennzeichnet, dass** sich wenigstens eine Strebe (34) quer von dem Führungsmittel (12) in entgegengesetzter Richtung der Tragplattform (16) erstreckt, wobei die Strebe (34) ein freies Ende (36) aufweist, das mit einem Teil eines Fahrzeuges verbindbar ist

10. Trägervorrichtung nach einem der vorherigen Ansprüche, **dadurch gekennzeichnet, dass** an der Trägervorrichtung (10) eine Aufnahme (40) für eine Anhängerkupplung (42) des Fahrzeugs angeordnet ist.

11. Trägervorrichtung nach einem der vorherigen Ansprüche, **dadurch gekennzeichnet, dass** an dem Führungsmittel (12) eine Aufnahme (40) für eine Anhängerkupplung (42) des Fahrzeugs angeordnet ist.

12. Fahrzeug mit einer Trägervorrichtung nach einem der vorherigen Ansprüche, **dadurch gekennzeichnet, dass** ein Führungsmittel (12) in im Wesentlichen horizontaler Richtung (26) entlang eines Hecks mit einer Hecktür, des Fahrzeugs angebracht ist, wobei eine Tragplattform (16) mittels mindestens eines Schwenkmittels (14), zumindest teilweise neben das Fahrzeug schwenkbar ist.

13. Fahrzeug nach Anspruch 13, **dadurch gekennzeichnet, dass** das Fahrzeug eine anhängige Anhängerkupplung (42) aufweist, die zur Verbindung der Trägervorrichtung (10) mit dem Fahrzeug dient.

14. Fahrzeug nach einem der Ansprüche 13 oder 14, **dadurch gekennzeichnet, dass** das Fahrzeug mindestens einen Tragholm (38) aufweist, der mit der Strebe (34) der Trägervorrichtung (10) zusammenwirkt.

## Claims

1. Support device for securing a load to a vehicle, comprising a guiding means (12), a pivoting means (14) and a support platform (16), whereby the pivoting means (14) is connected to the support platform (16), so that the support platform (16) is pivotable about a vertical axis (18) of the pivoting means (14), whereby the support platform (16) is pivotable about the pivoting means (14) in such a way that in a first pivoted position of the support platform (16) the support platform (16) is oriented substantially parallel to the guiding means (12) and in a second pivoted position the support platform (16) is oriented at an angle to the guiding means (12), whereby a first part of the support platform (16) is arranged on one side with respect to the guiding means (12) and a second part of the support platform (16) is arranged on the second side with respect to the guiding means (12), **characterised in that** a first pivoting means (14, 141), which is connected by means of an articulated support (54) to a second pivoting means (14, 142) arranged on the guiding means (12), is arranged on the support platform (16), and furthermore the support platform (16) rests on a support (28) and is displaceable relative thereto according to the pivoted position, and the support (28) is mounted on the guiding means (12) so as to be pivotable via a third pivoting means (14, 143).

2. Support device according to claim 1, **characterised in that** a guide element (60), which in a first pivoted position of the support platform (16) is arranged on or in the guiding means (12) and in a second pivoted position comes out of the guiding means (12), is provided on the support platform (16).

3. Support device according to claim 2, **characterised in that** the guide element (60) can be fastened on or in the guiding means (12) in order to prevent pivoting.

4. Support device according to any of the preceding claims, **characterised in that** the at least two pivoting means (14, 142, 143) are provided on one side (20) of the support platform (16), whereby the at least two pivoting means (14, 142, 143) are arranged on the guiding means (12).

5. Support device according to any of claims 2 and 3, **characterised in that** the guiding means (12) has at least one withdrawal opening (22), so that the guide element (60) can be withdrawn from the guiding means (12) through the withdrawal opening (22).

6. Support device according to any of claims 2, 3 and 5, **characterised in that** the guiding means (12) has a C-shaped or U-shaped cross-section in order to engage around the guide element (60).

7. Support device according to any of claims 5 and 6, **characterised in that** the support platform (16) is pivotable away from the guiding means (12) about the vertical axis (18) of the pivoting means (14, 142, 143) on a long end (24) of the guiding means (12), whilst the guide element (60) assigned to the support platform (16) is withdrawn at the withdrawal opening (22) by the pivoting away of the guiding means (12).

8. Support device according to any of the preceding claims, **characterised in that** the second pivoting means (142, 143) are each secured rotatably to a securing means through a hole (46) in the guiding means (12).

9. Support device according to any of the preceding claims, **characterised in that** at least one strut (34) extends transversely from the guiding means (12) in the opposite direction of the support platform (16), whereby the strut (34) has a free end (36) which can be connected to a part of a vehicle.

10. Support device according to any of the preceding claims, **characterised in that** a receptacle (40) for a trailer coupling (42) of the vehicle is arranged on the support device (10).

11. Support device according to any of the preceding claims, **characterised in that** a receptacle (40) for a trailer coupling (42) of the vehicle is arranged on the guiding means (12).

12. Vehicle with a support device according to any of the preceding claims, **characterised in that** a guiding means (12) is attached in a substantially horizontal direction (26) along the rear of the vehicle having a rear door, whereby a support platform (16) is pivotable by means of at least one pivoting means (14), at least partially alongside the vehicle.

13. Vehicle according to claim 13, **characterised in that** the vehicle has an attached trailer coupling (42) which serves for connecting the support device (10) to the vehicle.

14. Vehicle according to any of claims 13 or 14, **characterised in that** the vehicle has at least one supporting spar (38) which interacts with the strut (34) of the support device (10).

## Revendications

1. Dispositif de support pour fixer une charge à un véhicule, comprenant un moyen de guidage (12), un moyen de pivotement (14) et une plateforme de support (16), dans lequel le moyen de pivotement (14) est connecté à la plateforme de support (16) de sorte que la plateforme de support (16) peut pivoter autour d'un axe vertical (18) du moyen de pivotement (14), dans lequel la plateforme de support (16) peut pivoter autour du moyen de pivotement (14) de sorte que dans une première position de pivotement de la plateforme de support (16), la plateforme de support (16) est orientée sensiblement parallèlement au moyen de guidage (12) et, dans une seconde position de pivotement, la plateforme de support (16) est orientée selon un angle par rapport au moyen de guidage (12), dans lequel une première partie de la plateforme de support (16) est disposée sur un côté par rapport au moyen de guidage (12) et une seconde partie de la plateforme de support (16) est disposée sur le second côté par rapport au moyen de guidage (12), **caractérisé en ce qu'**un premier moyen de pivotement (14, 141) est disposé sur la plateforme de support (16), lequel est connecté par un support d'articulation (54) à un deuxième moyen de pivotement (14, 142) disposé sur le moyen de guidage (12), et en outre la plateforme de support (16) repose sur un support (28) et est déplaçable par rapport à celui-ci en fonction de la position de pivotement, et le support (28) est monté de manière pivotante sur le moyen de guidage (12) par l'intermédiaire d'un troisième moyen de pivotement (14, 143).

2. Dispositif de support selon la revendication 1, **caractérisé en ce qu'**un élément de guidage (60) est prévu sur la plateforme de support (16), qui est disposé sur ou dans le moyen de guidage (12) dans une première position de pivotement de la plateforme de support (16) et sort du moyen de guidage (12) dans une seconde position de pivotement.

3. Dispositif de support selon la revendication 2, **caractérisé en ce que** l'élément de guidage (60) peut être fixé sur ou dans le moyen de guidage (12) pour empêcher le pivotement.

4. Dispositif de support selon l'une quelconque des revendications précédentes, **caractérisé en ce que** les au moins deux moyens de pivotement (14, 142, 143) sont prévus sur un côté (20) de la plateforme de support (16), dans lequel les au moins deux moyens de pivotement (14, 142, 143) sont disposés sur les moyens de guidage (12).

5. Dispositif de support selon l'une quelconque des revendications 2 et 3, **caractérisé en ce que** le moyen de guidage (12) présente au moins une ouverture de retrait (22), de sorte que l'élément de guidage (60) peut être retiré du moyen de guidage (12) par l'ouverture de retrait (22).

6. Dispositif de support selon l'une quelconque des revendications 2, 3 et 5, **caractérisé en ce que** le moyen de guidage (12) présente une section transversale en forme de C ou de U pour entourer l'élément de guidage (60).

7. Dispositif de support selon l'une quelconque des revendications 5 et 6, **caractérisé en ce que** la plateforme de support (16) peut pivoter pour se dégager du moyen de guidage (12) autour de l'axe vertical (18) du moyen de pivotement (14, 142, 143) à une extrémité longitudinale (24) du moyen de guidage (12), pendant que l'élément de guidage (60) affecté à la plateforme de support (16) est retiré du moyen de guidage (12) au niveau de l'ouverture de retrait (22) par le pivotement pour se dégager.

8. Dispositif de support selon l'une quelconque des revendications précédentes, **caractérisé en ce que** les deuxième et troisième moyens de pivotement (142, 143) sont montés respectivement de manière rotative avec un moyen de montage à travers un trou (46) dans le moyen de guidage (12).

9. Dispositif de support selon l'une quelconque des revendications précédentes, **caractérisé en ce qu'**au moins une entretoise (34) s'étend transversalement du moyen de guidage (12) dans la direction opposée à la plateforme de support (16), dans lequel l'entretoise (34) présente une extrémité libre (36) qui peut être connectée à une partie d'un véhicule.

10. Dispositif de support selon l'une quelconque des revendications précédentes, **caractérisé en ce qu'**un logement (40) pour un dispositif d'attelage (42) du véhicule est disposé sur le dispositif de support (10).

11. Dispositif de support selon l'une quelconque des revendications précédentes, **caractérisé en ce qu'**un logement (40) pour un dispositif d'attelage (42) du véhicule est disposé sur le moyen de guidage (12).

12. Véhicule avec un dispositif de support selon l'une quelconque des revendications précédentes, **caractérisé en ce qu'**un moyen de guidage (12) est placé dans une direction sensiblement horizontale (26) le long d'un arrière avec une porte arrière du véhicule, dans lequel une plateforme de support (16) peut pivoter au moyen d'au moins un moyen de pivotement (14), au moins partiellement à côté du véhicule.

13. Véhicule selon la revendication 13, **caractérisé en ce que** le véhicule présente un attelage de remorque attelé (42) qui sert à connecter le dispositif de support (10) au véhicule.

14. Véhicule selon l'une quelconque des revendications 13 ou 14, **caractérisé en ce que** le véhicule présente au moins un longeron de support (38) qui coopère avec l'entretoise (34) du dispositif de support (10).
